# EUROPÄISCHE PATENTSCHRIFT

(11) **EP 2 282 859 B1**
(45) Veröffentlichungstag und Bekanntmachung des Hinweises auf die Patenterteilung: **02.01.2013**
(21) Anmeldenummer: 09741811.5
(22) Anmeldetag: 23.04.2009
(51) Int. Cl.: B23B 27/04

(54) **HALTER FÜR EINEN SPANABHEBENDEN WERKZEUGEINSATZ**
HOLDER FOR A MACHINING TOOL INSERT
ELÉMENT DE MAINTIEN POUR INSERT D'OUTIL DE RETRAIT DE COPEAUX

(30) Priorität: 09.05.2008 DE 102008023767
(43) Veröffentlichungstag der Anmeldung: 16.02.2011
(73) Patentinhaber: Hartmetall-Werkzeugfabrik Paul Horn GmbH, 72072 Tübingen (DE)
(72) Erfinder: SCHAEFER, Hans, 72810 Gomaringen (DE)
(74) Vertreter: Witte, Weller & Partner
(86) Internationale Anmeldenummer: PCT/EP2009/002948
(87) Internationale Veröffentlichungsnummer: WO 2009/135592

(56) Entgegenhaltungen:
- EP-A- 0 937 526
- WO-A-97/17154
- SU-A2- 1 400 790

## Beschreibung

Die vorliegende Erfindung betrifft einen Halter für einen spanabhebenden Werkzeugeinsatz, insbesondere einen Stech- oder Schneideinsatz, mit einem näherungsweise balkenförmigen Schneidenträger, einer in diesem endseitig ausgebildeten Ausnehmung, die als Aufnahmetasche für den Werkzeugeinsatz dient und durch die lichte Weite der Aufnahmetasche definierende Klemmbacken begrenzt ist, einem sich mit einem ersten Ende bis nahe an den inneren Abschluss der Aufnahmetasche erstreckenden Schlitz zum Ermöglichen einer elastischen Schwenkbeweglichkeit einer der Klemmbacken und mit einer Klemmeinrichtung, die zum Erzeugen einer im Bereich des Schlitzes auf die schwenkbewegliche Klemmbacke einwirkenden Klemmkraft ein Betätigungsglied aufweist. Ferner betrifft die vorliegende Erfindung ein entsprechendes Werkzeug mit einem solchen Halter und einem in die Ausnehmung des Halters eingesetzten Werkzeugeinsatz.

Ein solcher Halter für einen spanabhebenden Werkzeugeinsatz ist beispielsweise in der EP 0 937 526 A1 beschrieben, auf der der Oberbegriff von Anspruch 1 basiert. Bei dem bekannten Halter ist insbesondere eine das Betätigungsglied aufnehmende Bohrung in einem Abstand vom Schlitz angeordnet und ein die Klemmkraft vom Betätigungsglied auf die bewegliche Klemmbacke übertragendes Kraftübertragungsglied im Schneidenträger verschiebbar geführt. Durch diese räumliche Trennung des Betätigungsgliedes vom Schlitz und dadurch, dass die Klemmkraft über ein im Schneidenträger geführtes Bauelement auf die Klemmbacke übertragen wird, erfolgt die Kraftübertragung längs einer definierten Wirkungslinie, so dass störende Querkräfte weitgehend vermieden werden. Somit kann grundsätzlich mit verhältnismäßig hohen Klemmkräften problemlos und sicher gearbeitet werden.

Der vorliegenden Erfindung liegt die Aufgabe zugrunde, einen Halter der eingangs genannten Art, insbesondere im Hinblick auf die Aufnahme von Querkraftkomponenten, die beispielsweise bei einseitiger Belastung des Werkzeugeinsatzes oder bei einem Ausbruch aus dem Werkzeugeinsatz entstehen können, weiter zu verbessern.

Diese Aufgabe wird bei einem Halter der eingangs genannten Art dadurch gelöst, dass sich das zweite Ende des Schlitzes bis nahe an den Seitenrand des Schneidenträgers erstreckt, wobei zwischen der schwenkbeweglichen Klemmbacke und dem Schneidenträger ein das zweite Ende des Schlitzes überbrückender elastischer Verbindungssteg angeordnet ist.

Der Erfindung liegt dabei die Erkenntnis zugrunde, dass störende Querkräfte, die bei Benutzung des Werkzeuges auf den Werkzeugeinsatz und damit auch auf die Schwenkbeweglichkeit der Klemmbacke einwirken, noch besser vom Werkzeugeinsatz auf den Halter, insbesondere den Schneidenträger, übertragen und damit insgesamt besser aufgenommen werden können, wenn die schwenkbewegliche Klemmbacke nicht nur in einem Bereich (also im Bereich zwischen dem inneren Abschluss der Aufnahmetasche und dem ersten Ende des Schlitzes) fest mit dem Schneidenträger verbunden ist, sondern an einer weiteren Stelle eine Verbindung vorgesehen ist. Als besonders vorteilhaft hat sich diesbezüglich ein elastischer Verbindungssteg im Endbereich des zweiten Endes des Schlitzes herausgestellt, so dass also das zweite Ende des Schlitzes nicht mehr, wie bei dem bekannten Halter, vollständig am Seitenrand nach außen mündet, sondern dort quasi von dem elastischen Verbindungssteg überbrückt wird.

Dieser Verbindungssteg muss natürlich so elastisch ausgestaltet sein, dass die Schwenkbeweglichkeit der Klemmbacke gegenüber dem Schneidenträger noch gewährleistet ist, dass aber andererseits eine ausreichende Steifigkeit gegeben ist, um Querkräfte von der Klemmbacke auf den Schneidenträger zu übertragen. Aufgrund der Elastizität wirkt der Verbindungssteg quasi wie eine Feder, die auch dazu beitragen kann, dass bei Entlastung der schwenkbeweglichen Klemmbacke von dem durch das Betätigungsglied aufgebrachten Druck die Klemmbacke wieder in ihre Ausgangsstellung zurückgeführt wird. Je nach konkreter Ausgestaltung des Halters, insbesondere auch des Betätigungsgliedes, kann dies die Klemmstellung, in der der Werkzeugeinsatz geklemmt ist, oder die Entnahmestellung, in der der Werkzeugeinsatz entnommen werden kann, sein.

Bevorzugt ist vorgesehen, dass der Verbindungssteg aus demselben Material besteht wie der Schneidenträger und/oder die schwenkbewegliche Klemmbacke. Insbesondere ist der Verbindungssteg einstückig mit dem Schneidenträger und der schwenkbeweglichen Klemmbacke ausgestaltet. Dies hat Vorteile sowohl hinsichtlich der Fertigungstechnik als auch der mechanischen Festigkeit.

Bevorzugt weist der Verbindungssteg eine Dicke von weniger als 3 mm, insbesondere im Bereich von 0,5 mm bis 2 mm, auf. Eine Dicke in diesem Bereich gewährleistet eine ausreichende Elastizität bei gleichzeitig ausreichender mechanischer Stabilität des Verbindungsstegs.

In weiteren bevorzugten Ausgestaltungen ist vorgesehen, dass der Schlitz im Bereich des zweiten Endes abgewinkelt ist, wobei der abgewinkelte Endbereich des Schlitzes bevorzugt vom Seitenrand in Richtung zur Aufnahmetasche hin geneigt verläuft. Bevorzugt liegt dabei der Winkel der Neigung, bezogen auf die Längsachse des Halters, im Bereich zwischen 5° und 45°, insbesondere im Bereich zwischen 10° und 40°. Eine solche abgewinkelte Ausgestaltung, insbesondere mit der beschriebenen Neigung des Endbereichs des Schlitzes, hat den weiteren Vorteil, dass beim Verspannen des Werkzeugeinsatzes auf die schwenkbewegliche Klemmbacke ein zusätzlicher Druck in Richtung zur Aufnahmetasche einwirkt, so dass dies letztlich zu einer weiteren Erhöhung der auf den Werkzeugeinsatz einwirkenden Klemmkraft führt. Der rückwärtige Teil der Klemmbacke dreht sich beim Betätigen des Betätigungsgliedes quasi um einen im Verbindungssteg liegenden Drehpunkt, was aufgrund der Schräglage des Endbereichs des Schlitzes einen Druck auf die Klemmbacke nach vorne verursacht.

In weiteren vorteilhaften Ausgestaltungen ist vorgesehen, dass die Außenseite des Verbindungsstegs parallel zu dem Schlitz im Bereich des zweiten Endes verläuft und/oder, dass die Außenseite des Verbindungsstegs die gleiche Neigung aufweist wie der abgewinkelte Endbereich des Schlitzes. Dadurch hat der Verbindungssteg eine konstante Dicke und es lassen sich besonders gut die geeignete Elastizität und Steifigkeit des Verbindungssteges einstellen.

Bevorzugt weist der Schlitz einen Z-förmigen Verlauf auf. Abgesehen davon, dass diese Ausgestaltung nur wenige Änderungen gegenüber der bekannten Bauform des Halters erfordert, lässt sich bei dieser Ausgestaltung der mittlere Bereich des Schlitzes (zwischen den beiden Knickstellen) als rückwärtiger Anschlag für die schwenkbewegliche Klemmbacke nutzen.

In einer Weiterbildung ist vorgesehen, dass der Verbindungssteg beim zweiten Ende des Schlitzes abgewinkelt verläuft. Insbesondere ist ferner vorgesehen, dass die Außenseite des Verbindungsstegs stufenförmig, insbesondere mit einer oder zwei Stufen, verläuft. Dadurch erhält der Verbindungssteg eine Art Federwirkung (nach Art einer Blattfeder). Ggf. kann zudem als Schutz vorgesehen werden, dass an den Kanten an der Außenseite jeweils eine Schutzfase angebracht ist.

Grundsätzlich ist bei dem erfindungsgemäßen Halter der Schlitz vollständig innerhalb des Halters angeordnet und mündet nicht an dem Seitenrand nach außen, wie bei dem bekannten Halter. Der Verbindungssteg überbrückt somit am Seitenrand das zweite Ende des Schlitzes. Es ist jedoch in einer Weiterbildung vorgesehen, dass der Verbindungssteg weiter innerhalb des Halters liegend angeordnet ist und ein weiterer Randschlitz auf der von dem Schlitz abgewandten Seite des Verbindungsstegs zum Seitenrand des Schneidenträgers angeordnet ist. Der Randschlitz erstreckt sich also vom Verbindungssteg bis außen zum Seitenrand und kann beispielsweise so angeordnet sein, dass er quasi den eigentlichen Schlitz, der auf der anderen Seite des Verbindungsstegs endet, bis zum Seitenrand fortsetzt. Die obere Randfläche des Halters (also die obere Spannfläche) kann bei dieser Ausgestaltung gegenüber der bekannten Ausgestaltung im Wesentlichen unverändert beibehalten werden.

Für die Anordnung und Ausgestaltung des Betätigungsglieds sind unterschiedliche Ausgestaltungen denkbar. Eine erste Ausgestaltung, die auch aus der EP 0 937 526 A1 bekannt ist, sieht vor, dass das Betätigungsglied in einer Bohrung im Schneidenträger drehbar gelagert ist, dass die Bohrung in einem Abstand vom Schlitz angeordnet ist und dass ein die Klemmkraft vom Betätigungsglied auf die bewegliche Klemmbacke übertragendes Kraftübertragungsglied im Schneidenträger verschiebbar geführt ist. Die Kraftübertragung erfolgt somit längs einer definierten Wirkungslinie, so dass störende Querkräfte, die beispielsweise beim zu starken oder unsachgemäßen Betätigen des Betätigungsgliedes erzeugt werden und als störende Biegekraft an der beweglichen Klemmbacke angreifen, vermieden werden. Diese Ausgestaltung hat zudem den Vorteil, dass die Betätigung des Betätigungsgliedes von vorne (aus Richtung des Werkzeugeinsatzes) erfolgen kann, was oft bei beengten Platzverhältnissen bei in die Werkzeugmaschine eingespanntem Zustand wünschenswert oder gar die einzige Möglichkeit ist.

Eine alternative Ausgestaltung sieht vor, dass das Betätigungsglied in einer Bohrung in der beweglichen Klemmbacke oder in dem Schneidenträger drehbar gelagert ist und dass die Bohrung bis zum Schlitz reicht, so dass durch Betätigung des Betätigungsgliedes ein veränderbarer Druck auf den am Ende der Bohrung liegenden Bereich des Schneidenträgers bzw. der beweglichen Klemmbacke zur Veränderung der Klemmkraft der beweglichen Klemmbacke ausübbar ist. Die Kraft wird bei dieser Ausgestaltung also nicht über ein zusätzliches Kraftübertragungsglied, sondern direkt von dem Betätigungsglied durch Druckausübung übertragen. Diese Ausgestaltung hat den Vorteil, dass sie einfacher herzustellen ist und weniger Bauteile für die Klemmeinrichtung benötigt.

Das Betätigungsglied kann beispielsweise ein Gewindestift sein, der - bei der ersten Ausgestaltung - an seinem Ende einen Konus bildet, der auf das Kraftübertragungsglied, beispielsweise eine Kugel oder einen Stift, einwirkt. Hinsichtlich weiterer Details und Ausgestaltungen eines solchen Betätigungsgliedes sowie Kraftübertragungsgliedes sei auf die genannte EP 0 937 526 A1 verwiesen. Die dort beschriebenen Ausgestaltungen können grundsätzlich auch bei dem erfindungsgemäßen Halter eingesetzt werden.

Die Erfindung wird nachfolgend anhand von in den Zeichnungen dargestellten, die Erfindung nicht einschränkenden Ausführungsbeispielen näher erläutert. Es zeigen:
- Fig. 1: eine erste Ausführungsform eines erfindungsgemäßen Halters in verschiedenen Ansichten,
- Fig. 2: eine zweite Ausführungsform eines erfindungsgemäßen Halters in verschiedenen Ansichten,
- Fig. 3: eine dritte Ausführungsform eines erfindungsgemäßen Halters in einer Seitenansicht,
- Fig. 4: eine vierte Ausführungsform eines erfindungsgemäßen Halters in einer Seitenansicht,
- Fig. 5: eine fünfte Ausführungsform eines erfindungsgemäßen Halters in einer Seitenansicht und
- Fig. 6: eine sechste Ausführungsform eines erfindungsgemäßen Halters in einer Seitenansicht.

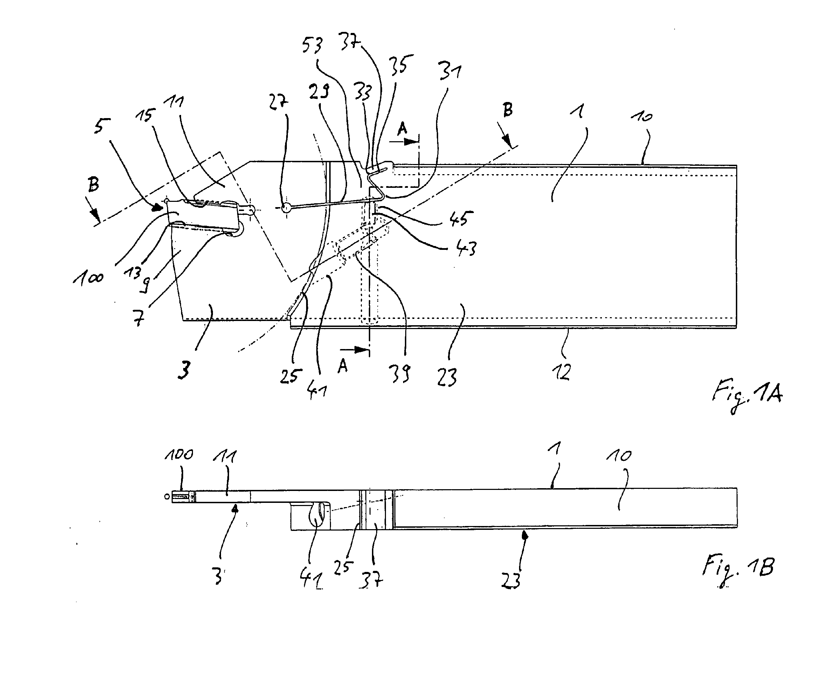

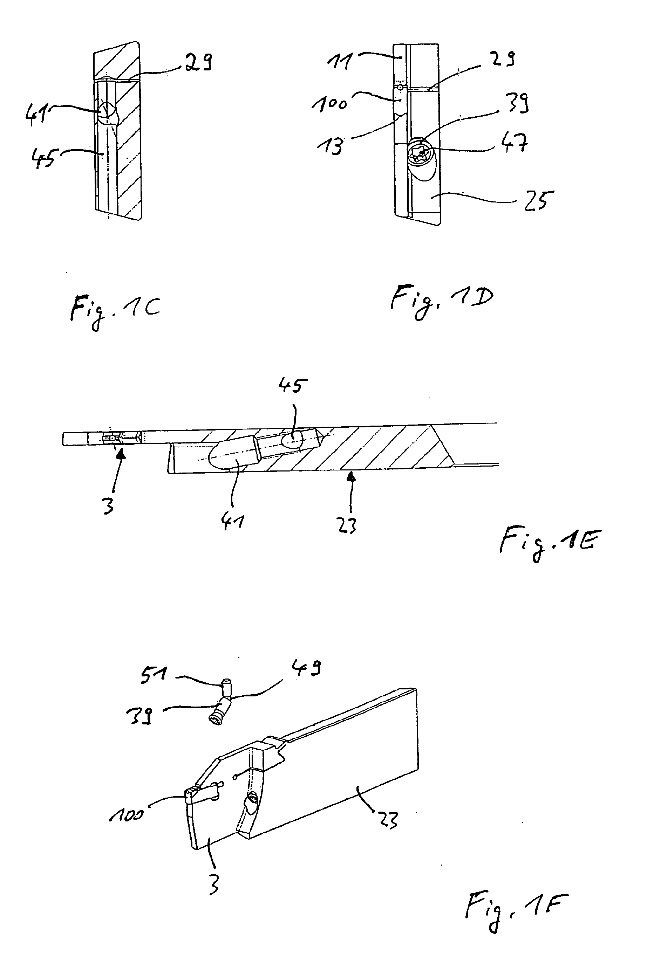

Fig. 1 zeigt eine erste Ausführungsform eines erfindungsgemäßen Halters in unterschiedlichen Ansichten. Dabei zeigen Fig. 1A eine Seitenansicht, Fig. 1B eine Draufsicht, Fig. 1C einen Schnitt entlang der Linie A-A, Fig. 1D eine Vorderansicht, Fig. 1E einen Schnitt entlang der Linie B-B und Fig. 1F eine perspektivische Seitenansicht.

Der Halter weist einen Schneidenträger 1 auf, der in seinem vorderen Endbereich 3 eine Aufnahmetasche 5 in Form eines zur Stirnseite hin offenen Durchbruches aufweist. In dieser Aufnahmetasche 5 ist ein Werkzeugeinsatz 100 eingesetzt, der auswechselbar und kein fester Bestandteil des Halters ist. Der die Aufnahmetasche 5 bildende Durchbruch weist an seinem inneren Ende eine Erweiterung 7 auf. In dem sich an die Erweiterung 7 anschließenden, nach vorne verlaufenden Bereich ist die lichte Weite der Aufnahmetasche 5 durch zwei Klemmbacken 9 und 11 begrenzt, die einander zugekehrte Klemmflächen 13 und 15 bilden, zwischen denen der Werkzeugeinsatz 100 festklemmbar ist. Wie teilweise aus Fig. 1D zu erkennen ist, weisen die Klemmflächen 13, 15 bevorzugt jeweils eine V-förmige Längsnut auf, wobei bevorzugt in der Längsnut der Klemmfläche 13 eine örtliche Vertiefung eingearbeitet ist. Diese Formgebung der Klemmflächen 13, 15 dient zur genauen Positionierung des mit hierzu komplementärer Konturierung versehenen Werkzeugeinsatzes 100.

Zur Anpassung an die verhältnismäßig geringe Breite von in der Aufnahmetasche 5 aufzunehmenden Werkzeugeinsätzen 100, beispielsweise Stecheinsätzen, weist der Schneidenträger 1 in seinem vorderen Endbereich 3 eine geringere Breite als in seinem rückwärtigen Balkenteil 23 auf. Der Übergang zwischen dem schmalen Endbereich 3 und dem Balkenteil 23 ist durch eine leicht gewölbte Schulterfläche 25 gebildet.

Ausgehend von einer dem inneren Ende der Erweiterung 7 der Aufnahmetasche 5 benachbarten Öffnung 27 erstreckt sich ein im Schneidenträger 1 durchgehend ausgebildeter Schlitz 29 geradlinig über die gewölbte Schulterfläche 25 hinaus bis in den Balkenteil 23 hinein. Dieser erste geradlinige Bereich des Schlitzes 29 verläuft im Wesentlichen parallel zum oberen Seitenrand 10 des Schneidenträgers 1 oder - wie in dem vorliegenden Ausführungsbeispiel gezeigt - schräg zu diesem oberen Seitenrand 10 mit einer leichten Neigung nach unten und nach vorne zum unteren Seitenrand 12 in Richtung des vorderen Endbereichs 3. Im Balkenteil 23 weist der Schlitz 29 zwei Knickstellen 31 und 33 auf, die dem Schlitz 29 im hinteren Bereich einen Z-förmigen Verlauf geben. Dabei verläuft der Schlitz 29 zwischen den Knickstellen 31, 33 nach oben und schräg nach vorne zum vorderen Endbereich 3 geneigt. Im Endbereich 35 nach der Knickstelle 33 verläuft der Schlitz 29 dann wiederum ähnlich wie der Anfangsbereich des Schlitzes 29, wobei der Endbereich 35 bevorzugt noch eine stärkere Neigung aufweist als der Anfangsbereich des Schlitzes 29.

Wie sich somit insbesondere in Figuren 1A und 1F entnehmen lässt, mündet der Schlitz 29, insbesondere dessen Endbereich 35, nicht am oberen Seitenrand 10 nach außen, sondern endet in einem Abstand vom oberen Seitenrand 10. Die schwenkbewegliche Klemmbacke 11 ist somit nicht nur, wie bei der bekannten Ausgestaltung des Halters, in dem Bereich zwischen der Erweiterung 7 der Aufnahmetasche 5 und der Öffnung 27 am Anfang des Schlitzes 29 mit dem schmalen Endbereich 3 des Schneidenträgers 1 fest verbunden, sondern auch über einen Verbindungssteg 37 am hinteren Bereich der schwenkbeweglichen Klemmbacke 11, der quasi den Endbereich 35 des Schlitzes 29 überbrückt und die schwenkbewegliche Klemmbacke 11 mit dem Balkenteil 23 verbindet.

Der Verbindungssteg 37 ist bevorzugt (aber nicht zwingend) aus demselben Material wie der Rest des Halters 1 und in diesem einstückig gebildet. Der Verbindungssteg 37 verläuft, wie beispielsweise in den Figuren 1A und 1F zu erkennen ist, parallel zu dem Endbereich 35 des Schlitzes 29, wobei die Außenkontur des Verbindungssteges 37 dieselbe Neigung aufweist wie der Endbereich 35 des Schlitzes 29 und damit eine konstante Dicke hat. Diese Dicke ist dabei so gewählt, dass der Verbindungssteg 37 einerseits eine ausreichende Steifigkeit aufweist, um bei Einsatz des Werkzeuges auf den Werkzeugeinsatz 100 und damit die schwenkbewegliche Klemmbacke 11 einwirkende Querkräfte aufzunehmen. Andererseits muss der Verbindungssteg 37 auch ausreichend elastisch sein, um die Schwenkbeweglichkeit der Klemmbacke 11 zu gewährleisten, damit diese ausreichend schwenkbeweglich ist, um den Werkzeugeinsatz 100 festzuklemmen bzw. ihn für einen Einsatzwechsel zu entlasten. Um diese beiden Vorgaben zu erfüllen, ist die Dicke des Verbindungsstegs 37 bei einer praktischen Ausgestaltung geringer als 3 mm gewählt, vorzugsweise im Bereich zwischen 0,5 und 2 mm.

Die schräge Anordnung des Verbindungsstegs 37 und des Endbereichs 35 des Schlitzes 29 bewirken, dass auf die schwenkbewegliche Klemmbacke 11 beim Einschrauben der Klemmschraube 39 zusätzlich eine Druckkomponente nach vorne (in Richtung auf den Werkzeugeinsatz 100) und leicht nach unten wirkt, die zusätzlich eine Klemmkraft auf den Werkzeugeinsatz 100 aufbringt und damit eine noch bessere Verklemmung bewirkt.

Insgesamt ergibt sich somit bei dem gezeigten Halter aufgrund der Lageanordnung des Schlitzes 29 eine elastische Schwenkbeweglichkeit für die Klemmbacke 11, wobei das Drehzentrum im Bereich zwischen der Öffnung 27 und dem benachbarten Rand der Erweiterung 7 liegt. Um eine solche Schwenkbewegung der Klemmbacke 11 zu bewirken, können unterschiedliche Klemmeinrichtungen eingesetzt werden. Eine erste Ausgestaltung einer solchen Klemmeinrichtung, die auch bei dem aus der EP 0 937 526 A1 bekannten Halter eingesetzt ist, ist in Fig. 1 gezeigt.

Bei diesem Ausführungsbeispiel ist als Betätigungsglied der Klemmeinrichtung eine Klemmschraube 39 vorgesehen, die in einer mit Innengewinde versehenen Bohrung 41 sitzt. Die Bohrung 41 erstreckt sich unter einem Winkel zu einer als Führung für ein Kraftübertragungsglied 43 dienenden zweiten Bohrung 45, wobei sich die Bohrungen 41 und 45 in der Nähe des Schlitzes 29 schneiden. Die äußere Mündung der Bohrung 41 befindet sich an der Schulterfläche 25, die den Absatz zwischen dem schmalen vorderen Endbereich 3 und dem rückwärtigen Balkenteil 22 des Schneidenträgers 1 bildet. An dieser Mündungsöffnung ist beispielsweise ein Torx oder Innensechskant 47 der Klemmschraube 39 für deren Drehbetätigung zugänglich.

Am anderen Ende weist die Klemmschraube 39 einen Konus 49 auf, der in die zweite Bohrung 45 ragt. Ein als Kraftübertragungsglied vorgesehener Bolzen 51 stützt sich einerseits am Konus 49 und andererseits an der Unterseite des rückwärtigen Teils 53 der beweglichen Klemmbacke 11 ab. Um ein Herausfallen des Bolzens 51 aus der Bohrung 45 bei heraus geschraubter Klemmschraube 39 zu verhindern, kann zudem ein (nicht gezeigter) Sicherungsstift in eine die Bohrung 45 tangierende, unterhalb des Bolzens 51 quer verlaufende (nicht gezeigte) Sicherungsbohrung eingesetzt werden.

Durch Einschrauben der Klemmschraube 39 erzeugt die Umfangsfläche des endseitigen Konus 49 eine Klemmkraft in Zusammenwirkung mit dem Bolzen 51, der in der Bohrung 45 geführt ist. Auf den Teil 53 der beweglichen Klemmbacke 11 wird somit lediglich eine Kraftkomponente mit längs der Achse der Bohrung 45 verlaufender Wirkungslinie, also grundsätzlich ohne jede Querkraftkomponente, aufgebracht. Wie ohne Weiteres ersichtlich ist, ist die Klemmeinrichtung selbsthemmend, das heißt die Spannkraft, mit der ein betreffender Werkzeugeinsatz 100 in der Aufnahmetasche 5 festgeklemmt wird, ist lediglich durch Herausschrauben der Klemmschraube 39 aufhebbar.

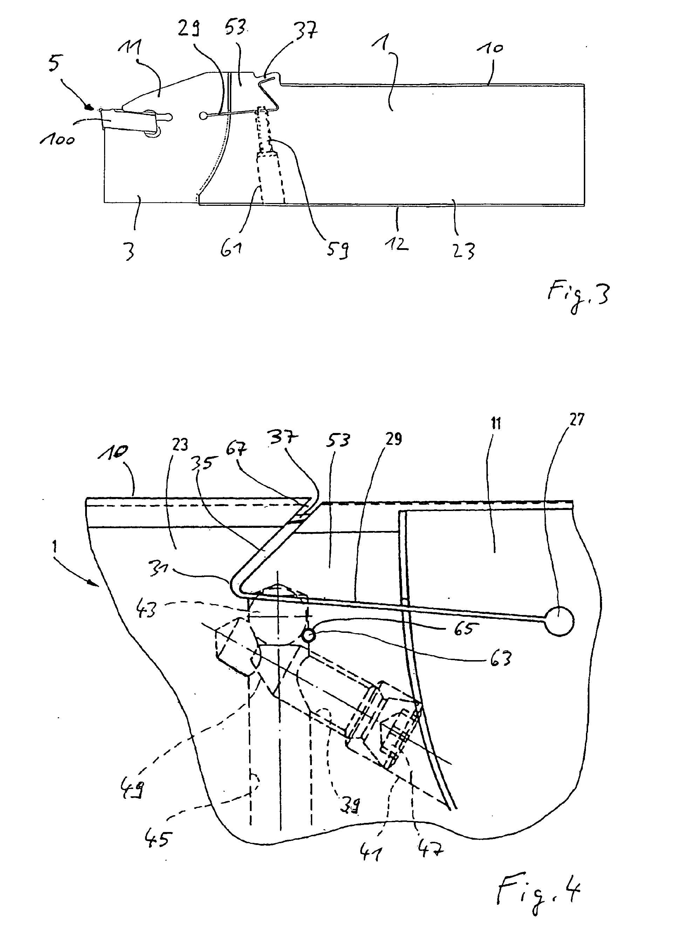

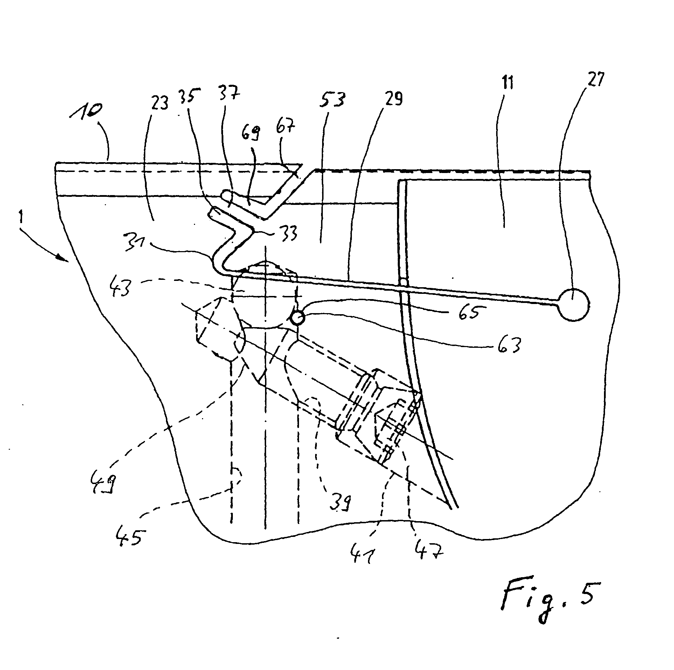

Das Kraftübertragungsglied 51 muss natürlich nicht zwingend ein Bolzen, wie in Fig. 1F gezeigt, sein, sondern kann auch anders ausgestaltet sein, beispielsweise als Kugel, wie in den Figuren 4 und 5 der genannten EP 0 937 526 A1 gezeigt ist. Auch andere Ausgestaltungen sind denkbar, die eine Übertragung der Kraft von dem Betätigungsglied 39, das ebenfalls anders ausgestaltet sein kann als in Fig. 1 gezeigt, auf die bewegliche Klemmbacke 11 ermöglichen.

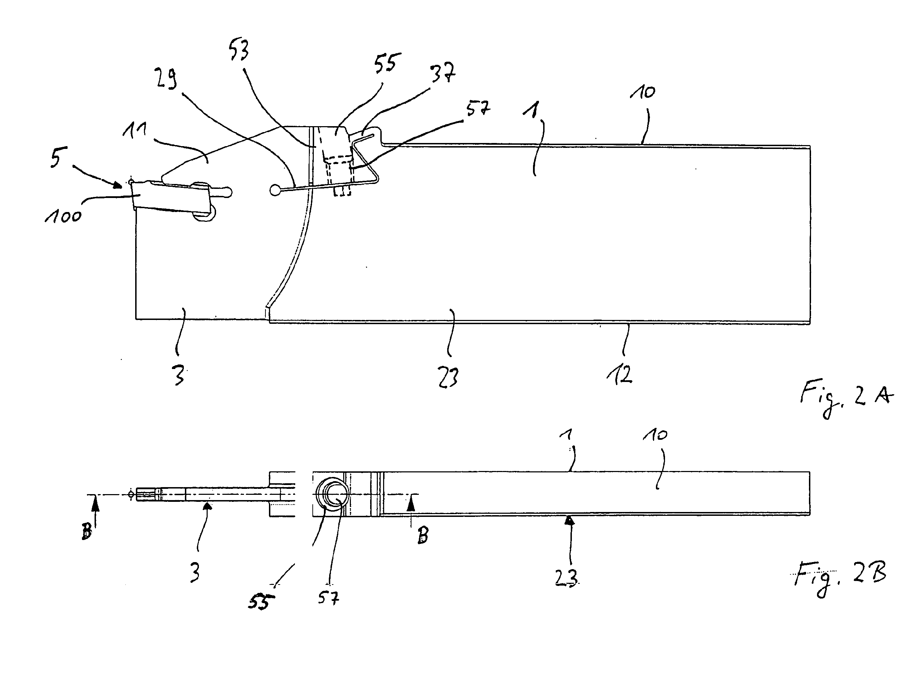

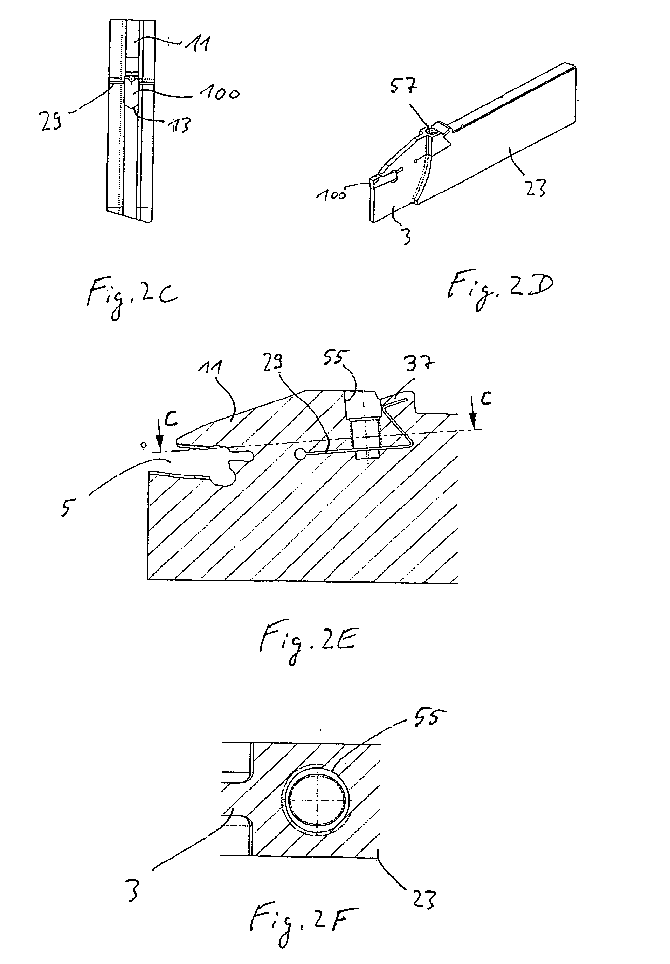

Eine zweite Ausführungsform eines erfindungsgemäßen Halters ist in Fig. 2 gezeigt. Dabei zeigen Fig. 2A eine Seitenansicht, Fig. 2B eine Draufsicht, Fig. 2C eine Vorderansicht, Fig. 2D eine perspektivische Seitenansicht, Fig. 2E einen Schnitt entlang der Linie B-B und Fig. 2F einen Schnitt entlang der Linie C-C. Die grundsätzliche Ausgestaltung des Schneidenträgers 1, insbesondere die Ausgestaltung im Bereich der Ausnehmung 5 zum Festklemmen des Schneideinsatzes 100 und die Ausgestaltung des Schlitzes 29, entspricht der Ausgestaltung des in Fig. 1 gezeigten Schneidenträgers 1. Es bestehen jedoch folgende Unterschiede.

Der vordere Endbereich 3 ist nicht, wie bei dem in Fig. 1 gezeigten Schneidenträger 1 seitlich und außermittig bezüglich der Längserstreckungsachse des Halters angeordnet (wie sich insbesondere in Fig. 1B erkennen lässt), sondern verläuft mittig in Bezug auf die Längserstreckungsachse, durch die auch die Schnittebene B-B (vgl. Fig. 2B und Fig. 2F) verläuft. Die mittige Ausgestaltung hat den Vorteil, dass eine bessere Klemmung des Werkzeugeinsatzes erfolgen kann, da zentral Druck auf den schwenkbeweglichen Klemmhalter ausgeübt werden kann. Die außermittige Ausgestaltung hat dagegen den Vorteil, dass ein seitlicher Seitenrand des (gesamten) Halters als ebene Fläche ausgebildet werden kann, die als Bezugsfläche dienen kann, was häufig bei Werkzeugmaschinen zur Einspannung des Halters erforderliche ist, und die ein kollisionsfreies Arbeiten an dieser Seite ermöglicht (da an dieser ebenen Seite keine gewölbte Schulterfläche übersteht).

Ferner ist die Klemmeinrichtung anders ausgestaltet als bei der in Fig. 1 gezeigten Ausführungsform. Bei der in Fig. 2 gezeigten Ausführungsform ist eine Bohrung 55 im hinteren Bereich 53 der schwenkbeweglichen Klemmbacke 11 vorgesehen, die vom Seitenrand 10 mindestens bis zum Schlitz 29, gegebenenfalls geringfügig darüber hinaus, reicht. Die Bohrung 55 verläuft dabei im Wesentlichen senkrecht zu dem Anfangsbereich des Schlitzes 29. Als drehbares Betätigungsglied ist wiederum eine Klemmschraube 57 vorgesehen, die in der Bohrung 55 mit Innengewinde sitzt. Durch Verdrehen der Klemmschraube 57 drückt diese von oben gegen die untere Innenseite des Schlitzes 29, um die schwenkbewegliche Klemmbacke 11 zu verklemmen. Wenn die Klemmschraube 57 dagegen aus der Bohrung 55 herausgedreht wird, wird die Klemmbacke 11 wieder entlastet, so dass der Werkzeugeinsatz 100 entnommen werden kann. Insgesamt lässt sich somit eine konstruktiv einfache und kostengünstige Lösung erzielen.

Fig. 3 zeigt eine weitere, der in Fig. 2 gezeigten Ausführungsform sehr ähnliche Ausführungsform. Auch bei dieser Ausführungsform wird als Betätigungsglied eine verhältnismäßig einfache Druckschraube, beispielsweise in Form eines Gewindestiftes, eingesetzt. Diese Druckschraube 59 sitzt bei dieser Ausgestaltung jedoch nicht in einer durch den hinteren Abschnitt der schwenkbeweglichen Klemmbacke 11 geführten Bohrung, sondern in einer durch den Balkenteil 23 unterhalb des Schlitzes 29 leicht schräg, und senkrecht zum Anfangsbereich des Schlitzes 29 verlaufenden Bohrung 61. Die Bohrung 61 verläuft also vom unteren Seitenrand 12 des Balkenteils 23 bis zum Schlitz 29 und gegebenenfalls darüber hinaus und weist wiederum ein Innengewinde auf. Die Klemmschraube 59 drückt beim Hineindrehen also von unten gegen den hinteren Abschnitt 53 der schwenkbeweglichen Klemmbacke 11, um den Werkzeugeinsatz 100 in der Aufnahmetasche 5 fest einzuklemmen. Ansonsten ist die Wirkungsweise grundsätzlich identisch mit der Wirkungsweise der in Fig. 2 gezeigten Ausführungsform. Je nach den Gegebenheiten, insbesondere bei der Einspannung des Halters in der Werkzeugmaschine, kann es sinnvoll sein, diese Ausgestaltung statt der in Fig. 2 gezeigten Ausgestaltung der Klemmeinrichtung zu wählen.

Fig. 4 zeigt eine weitere Ausführungsform eines erfindungsgemäßen Halters, wobei ausschnittsweise vergrößert nur der Bereich des Schlitzes 29 und der Klemmeinrichtung gezeigt ist. Die Klemmeinrichtung ist dabei ähnlich ausgestaltet wie die in Fig. 1 gezeigte Klemmeinrichtung, wobei hier statt eines Kraftübertragungsgliedes 43 in Form eines Bolzens (vgl. Fig. 1F) eine Kugel zum Einsatz kommt. Ferner ist hier die quer verlaufende Sicherungsbohrung 65 erkennbar, in die ein Sicherheitsstift 63 eingesetzt ist, um bei heraus geschraubter Klemmschraube 39 zu verhindern, dass die Kugel 43 durch die Bohrung 45 heraus fällt.

Ferner sind bei dieser Ausführungsform der Endbereich des Schlitzes 29 und der Verbindungssteg 37 anders ausgestaltet. Der Verbindungssteg 37 verläuft bei dieser Ausführungsform nicht mehr unmittelbar am äußeren Seitenrand 10 des Schneidenträgers 1 (bildet also selbst einen Teil des Seitenrandes 10), sondern verläuft weiter innen und trennt quasi den Schlitz 29 in dessen Endbereich in zwei Teile bzw. grenzt den eigentlichen Schlitz 29 von einem weiteren Randschlitz 67 ab, der quasi den Endbereich 35 des Schlitzes 29 jenseits des Verbindungssteges 37 bis zum oberen Seitenrand 10 hin fortsetzt. Grundsätzlich ist bei dieser Ausführungsform die Funktion des Verbindungssteges aber dieselbe wie bei den anderen Ausführungsformen.

Diese Ausführungsform hat den Vorteil, dass die obere Randfläche 10 eben ausgestaltet ist und keine Stufen oder schrägen Flächen, insbesondere aufgrund des außen liegenden Verbindungssteges bei den anderen Ausführungsformen, aufweist.

Grundsätzlich kann der Schlitz 29, wie bei der in Fig. 4 gezeigten Ausführungsform, auch nur einen einzigen Knick 31 aufweisen; es müssen nicht, wie bei den anderen Ausführungsformen gezeigt, zwei (oder mehr) Knicke vorhanden sein. Ferner kann auch die Außenkontur der oberen Seitenfläche 10 im Bereich des Verbindungssteges 37 bzw. der Mündung des weiteren Schlitzes 67 nach außen eben sein (wie in Fig. 4 gezeigt) und muss nicht zwingend (wie in den Figuren 1 bis 3 gezeigt) stufenförmig ausgebildet sein.

Eine weitere Ausführungsform ist in Fig. 5 gezeigt. Diese Ausführungsform ist der in Fig. 4 gezeigten Ausführungsform sehr ähnlich. Der Schlitz 29 ragt ebenfalls nicht bis an den Seitenrand 10, weist aber zwei Knickstellen 31, 33 und einen schräg nach vorne und nach unten weisenden Endbereich 35 auf. Der Randschlitz 67 ist nun so ausgestaltet, dass er nach außen mündet, aber in seinem innen liegenden, abgeknickten Anfangsbereich 69 im wesentlichen parallel zu dem Endbereich 35 des Schlitzes 29 verläuft, so dass dazwischen der Verbindungssteg 37 gebildet ist. Auch bei dieser Ausführungsform bewirkt der schräge Verlauf des Verbindungsstegs 37 somit, dass die Klemmbacke 11 bei Druckausübung auf die Klemmbacke 11 durch die Klemmeinrichtung nach vorne und nach unten verkippt wird und eine besonders gute Klemmung des Werkzeugeinsatzes erreicht wird.

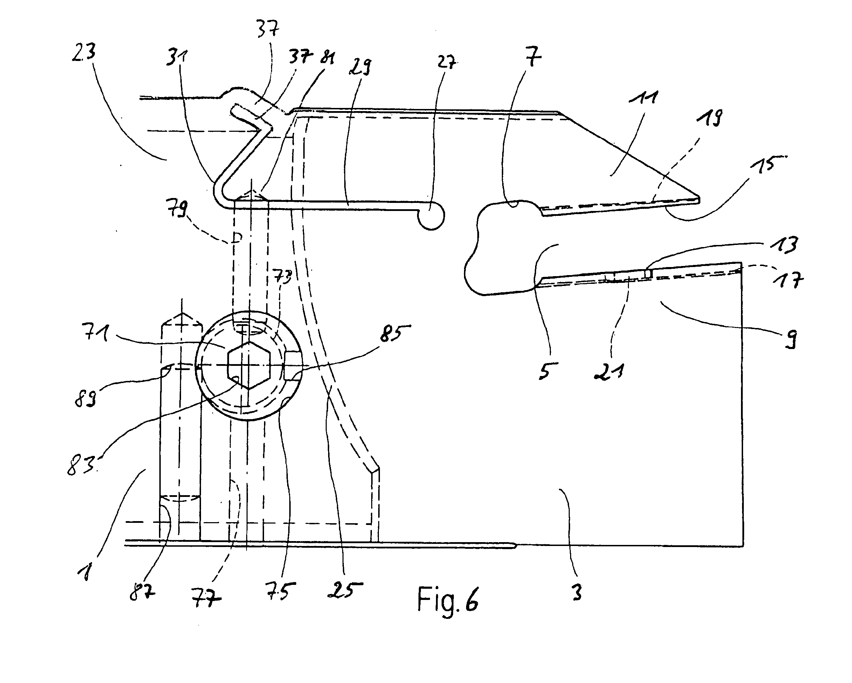

Fig. 6 zeigt eine Seitenansicht einer weiteren Ausführungsform eines erfindungsgemäßen Halters. Erkennbar ist in dieser Figur zunächst, dass die Klemmflächen 13, 15 jeweils eine V-förmige Längsnut 17 bzw. 19 aufweisen, wobei in der Längsnut 17 bevorzugt eine örtliche Vertiefung 21 eingearbeitet ist. Diese Formgebung der Klemmflächen 13, 15 dient zur genauen Positionierung des mit hierzu komplementärer Konturierung versehenen Werkzeugeinsatzes. Eine solche Ausgestaltung der Klemmflächen kann auch bei anderen Ausführungsformen eingesetzt werden.

Ferner ist bei dieser Ausgestaltung ein Verbindungssteg 37 in ähnlicher Ausgestaltung wie bei der in Fig. 1 gezeigten Ausführungsform vorgesehen, der parallel zu dem Endbereich 35 des Schlitzes 29 verläuft. Für diesen Verbindungssteg bzw. die Ausgestaltung des Halters in diesem Bereich gelten die in Bezug auf Fig. 1 gemachten Aussagen gleichermaßen.

Als Betätigungsglied der bei dieser Ausführungsform vorgesehenen Klemmeinrichtung ist ein an einem Drehzapfen 71 ausgebildeter Exzenter 73 vorgesehen. Der Drehzapfen 71 ist in einer im Balkenteil 23 des Schneidenträgers 1 ausgebildeten Querbohrung 75 drehbar gelagert. Eine zweite Bohrung 77, die sich vom unteren Rand des Balkenteils 23 durchgehend bis zum Schlitz 29 erstreckt, wo sie der Stelle 31 benachbart mündet, schneidet die Querbohrung 75 rechtwinklig in deren zentralem Bereich. Der Abschnitt der Bohrung 77 zwischen der Querbohrung 75 und dem Schlitz 29 bildet eine Führung, in der ein Kraftübertragungsstift 79 längs verschiebbar aufgenommen ist. Der Stift 79 stützt sich einerseits am Radius des Exzenters 73 und andererseits an dem der Stelle 31 benachbarten, den Schlitz 29 begrenzenden, hinteren Teil 81 der beweglichen Klemmbacke 11 ab.

Der Exzenter 73 ist durch eine Ringnut gebildet, die in den Umfang des kreiszylindrischen Drehzapfens 71, zu dessen Drehachse versetzt, als Vertiefung eingearbeitet ist. Für die Drehbetätigung des in der Querbohrung 75 drehbar gelagerten Drehzapfens 71 weist dieser einen Torx oder Innensechskant 83 auf. Vor dem Einsetzen des Drehzapfens 71 in die Querbohrung 75 ist der Kraftübertragungsstift 79 vom unteren, offenen Ende der Bohrung 77 her einführbar. Damit der Drehzapfen 71 sodann in die Querbohrung 75 einführbar ist, weist der Drehzapfen 71 in den Wandteilen, die die den Exzenter 73 bildende Ringnut seitlich begrenzen, Durchbrüche 85 auf, die bei geeigneter Drehstellung des Drehzapfens 71 dessen Einführung in die Querbohrung 75 nach dem Einsetzen des Kraftübertragungsstiftes 79 ermöglichen.

Eine sich parallel zur Bohrung 77 erstreckende, weitere Bohrung 87 tangiert die Querbohrung 75 im mittleren Bereich, in dem sich bei eingesetztem Drehzapfen 71 die den Exzenter 73 bildende, vertiefte Ringnut befindet. Durch Einsetzen eines Sicherungsstiftes 89 in die Bohrung 87 ist somit der Drehzapfen 71, zwischen dessen äußere Wandteile der Sicherungsstift 89 eingreift, gegen Axialverschieben in der Querbohrung 75 gesichert.

Durch Verdrehen des Drehzapfens 71 mittels eines mit dem Innensechskant 83 zusammenwirkenden Werkzeugs über den Kraftübertragungsstift 79, der sich am Radius des Exzenters 73 einerseits und an der beweglichen Klemmbacke 11 an deren hinteren Ende 81 abstützt, eine zwischen den Klemmflächen 13, 15 wirkende Klemmkraft erzeugbar. Durch die Führung des Kraftübertragungsstiftes 79 in der Bohrung 77 erfolgt die Übertragung der Klemmkraft querkraftfrei. Durch die geringe Nockensteigung des Exzenters 73 in Zusammenwirkung mit dem Kraftübertragungsstift 79 ist Selbsthemmung des in der Querbohrung 75 passend drehbar gelagerten Drehzapfens 71 gewährleistet, so dass die Klemmung des im Klemmspalt zwischen den Klemmbacken 9 und 11 gesicherten Werkzeugeinsatzes nur durch zwangsmäßiges Rückdrehen des Drehzapfens 71 aufhebbar ist.

Grundsätzlich muss bei allen Ausführungsformen der Verbindungssteg nicht zwingend über die gesamte Breite des Schlitzes verlaufen, sondern könnte auch nur bereichsweise (ein- oder mehrteilig) entlang der Breite des Schlitzes vorgesehen sein, sofern der gewünschte Zweck des Verbindungssteges erfüllt bleibt. Ferner können Position, Verlauf und Dimensionierung des Schlitzes bzw. der Schlitze und des Verbindungsstegs auch anders sein, als in den Ausführungsbeispielen gezeigt. Diese Parameter hängen insbesondere auch von der konkreten Ausgestaltung und Funktionsweise des Halters ab.

Grundsätzlich gilt, dass durch Länge, Breite, Winkel und Verlauf des Schlitzes (insbesondere des Endbereichs des Schlitzes) und des Verbindungsstegs die Elastizität und Steifigkeit und damit die Fähigkeit zur Aufnahme von Querkräften einstellbar sind. Durch die Länge des Schlitzes kann insbesondere die Hebelwirkung, die zum Festklemmen des Werkzeugeinsatzes aufgebracht wird, eingestellt werden.

Ferner sind die unterschiedlichen Ausgestaltungen des Verbindungssteges und des Schlitzes sowie die unterschiedlichen Ausgestaltungen der Klemmeinrichtung der vorstehend gezeigten Ausführungsformen auch in anderen als den gezeigten Kombinationen miteinander verwendbar.

## Patentansprüche

1. Halter für einen spanabhebenden Werkzeugeinsatz (100), insbesondere einen Stech- oder Schneideinsatz, mit einem näherungsweise balkenförmigen Schneidenträger (1), einer in diesem endseitig ausgebildeten Ausnehmung, die als Aufnahmetasche (5) für den Werkzeugeinsatz dient und durch die lichte Weite der Aufnahmetasche (5) definierende Klemmbacken (9, 11) begrenzt ist, einem sich mit einem ersten Ende bis nahe an den inneren Abschluss (7) der Aufnahmetasche (5) erstreckenden Schlitz (29) zum Ermöglichen einer elastischen Schwenkbeweglichkeit einer (11) der Klemmbacken und mit einer Klemmeinrichtung, die zum Erzeugen einer im Bereich des Schlitzes (29) auf die schwenkbewegliche Klemmbacke (11) einwirkenden Klemmkraft ein Betätigungsglied (41, 57) aufweist,
**dadurch gekennzeichnet, dass** sich das zweite Ende (35) des Schlitzes (29) bis nahe an den Seitenrand (10) des Schneidenträgers (1) erstreckt, wobei zwischen der schwenkbeweglichen Klemmbacke (11) und dem Schneidenträger (1) ein das zweite Ende (35) des Schlitzes (29) überbrückender elastischer Verbindungssteg (37) angeordnet ist.

2. Halter nach Anspruch 1, **dadurch gekennzeichnet, dass** der Verbindungssteg (37) aus demselben Material besteht wie der Schneidenträger (1) und/oder die schwenkbewegliche Klemmbacke (11).

3. Halter nach einem der vorstehenden Ansprüche, **dadurch gekennzeichnet, dass** der Verbindungssteg (37) eine Dicke von weniger als 3 mm, insbesondere im Bereich von 0,5 mm bis 2 mm, aufweist.

4. Halter nach einem der vorstehenden Ansprüche, **dadurch gekennzeichnet, dass** der Schlitz (29) im Bereich des zweiten Endes (35) abgewinkelt ist.

5. Halter nach Anspruch 4, **dadurch gekennzeichnet, dass** der abgewinkelte Endbereich (35) des Schlitzes (29) vom Seitenrand (10) in Richtung zur Aufnahmetasche (5) hin geneigt verläuft.

6. Halter nach Anspruch 5, **dadurch gekennzeichnet, dass** der Winkel der Neigung, bezogen auf die Längsachse des Halters, im Bereich zwischen 5° und 45°, insbesondere im Bereich zwischen 10° und 40°, verläuft.

7. Halter nach einem der vorstehenden Ansprüche, **dadurch gekennzeichnet, dass** die Außenseite des Verbindungsstegs (37) parallel zu dem Schlitz (29) im Bereich des zweiten Endes (35) verläuft.

8. Halter nach Anspruch 5 und 7, **dadurch gekennzeichnet, dass** die Außenseite des Verbindungsstegs (37) die gleiche Neigung aufweist wie der abgewinkelte Endbereich (35) des Schlitzes (29).

9. Halter nach einem der vorstehenden Ansprüche, **dadurch gekennzeichnet, dass** der Schlitz (29) einen Z-förmigen Verlauf aufweist.

10. Halter nach einem der vorstehenden Ansprüche, **dadurch gekennzeichnet, dass** der Verbindungssteg (37) beim zweiten Ende (35) des Schlitzes (29) abgewinkelt verläuft.

11. Halter nach einem der vorstehenden Ansprüche, **dadurch gekennzeichnet, dass** die Außenseite des Verbindungsstegs (37) stufenförmig, insbesondere mit einer oder zwei Stufen, verläuft.

12. Halter nach einem der Ansprüche 1 bis 10, **dadurch gekennzeichnet, dass** der Verbindungssteg (37) innerhalb des Halters liegend angeordnet ist und ein Randschlitz (67) auf der von dem Schlitz (29) abgewandten Seite des Verbindungsstegs bis zum Seitenrand (10) des Schneidenträgers (1) angeordnet ist.

13. Halter nach einem der vorstehenden Ansprüche, **dadurch gekennzeichnet, dass** das Betätigungsglied (41) in einer Bohrung (39) im Schneidenträger (1) drehbar gelagert ist, dass die Bohrung (39) in einem Abstand vom Schlitz (29) angeordnet ist und dass ein die Klemmkraft vom Betätigungsglied (41) auf die bewegliche Klemmbacke (11) übertragendes Kraftübertragungsglied (43) im Schneidenträger (1) verschiebbar geführt ist.

14. Halter nach einem der Ansprüche 1 bis 12, **dadurch gekennzeichnet, dass** das Betätigungsglied (57, 59) in einer Bohrung (55, 61) in der beweglichen Klemmbacke (11) oder in dem Schneidenträger (1) drehbar gelagert ist und dass die Bohrung (55, 61) bis zu dem Schlitz (29) reicht, so dass durch Betätigung des Betätigungsgliedes (57, 59) ein veränderbarer Druck auf den am Ende der Bohrung liegenden Bereich des Schneidenträgers (1) bzw. der beweglichen Klemmbacken (11) zur Veränderung der Klemmkraft der beweglichen Klemmbacke (11) ausübbar ist.

15. Werkzeug zur spanabhebenden Bearbeitung eines Werkstückes mit einem Halter nach einem der vorstehenden Ansprüche und einem in die Ausnehmung in dem Halter eingesetzten Werkzeugeinsatz.

## Claims

1. A holder for a chip-removing tool insert (100), in particular a recessing or cutting insert, having an approximately bar-shaped cutter carrier (1), a cavity formed inside the end thereof, which serves as a receiving pocket (5) for the tool insert and is delimited by clamping jaws (9, 11) that define the inside width of the receiving pocket (5), a slot (29) extending with a first end to within the proximity of the inner limit (7) of the receiving pocket (5) so as to permit elastic pivotability of one (11) of the clamping jaws, and having a clamping means comprising an actuation member (41, 57) for producing a clamping force that acts within the region of the slot (29) upon the pivotable clamping jaw (11), **characterized in that** the second end (35) of the slot (29) extends to within the proximity of the side edge (10) of the cutter carrier (1), an elastic connecting web (37) that bridges the second end (35) of the slot (29) being disposed between the pivotable clamping jaw (11) and the cutter carrier (1).

2. The holder as claimed in claim 1, **characterized in that** the connecting web (37) is composed of the same material as the cutter carrier (1) and/or the pivotable clamping jaw (11).

3. The holder as claimed in either one of the preceding claims, **characterized in that** the connecting web (37) has a thickness of less than 3 mm, in particular in the range from 0.5 mm to 2 mm.

4. The holder as claimed in any one of the preceding claims, **characterized in that** the slot (29) is offset angularly in the region of the second end (35).

5. The holder as claimed in claim 4, **characterized in that** the angularly offset end region (35) of the slot (29) runs in an inclined manner from the side edge (10) towards the receiving pocket (5).

6. The holder as claimed in claim 5, **characterized in that** the angle of the inclination, relative to the longitudinal axis of the holder, lies in the range between 5° and 45°, in particular in the range between 10° and 40°.

7. The holder as claimed in any one of the preceding claims, **characterized in that** the outside of the connecting web (37) runs parallel to the slot (29) in the region of the second end (35).

8. The holder as claimed in claims 5 and 7, **characterized in that** the outside of the connecting web (37) has the same inclination as the angularly offset end region (35) of the slot (29).

9. The holder as claimed in any one of the preceding claims, **characterized in that** the slot (29) has a Z-shaped course.

10. The holder as claimed in any one of the preceding claims, **characterized in that** the connecting web (37) runs in an angularly offset manner in the case of the second end (35) of the slot (29).

11. The holder as claimed in any one of the preceding claims, **characterized in that** the outside of the connecting web (37) runs in a stepped shape, in particular having one or two steps.

12. The holder as claimed in any one of claims 1 to 10, **characterized in that** the connecting web (37) is disposed so as to lie within the holder, and an edge slot (67) is disposed, on the side of the connecting web that faces away from the slot (29), as far as the side edge (10) of the cutter carrier (1).

13. The holder as claimed in any one of the preceding claims, **characterized in that** the actuation member (41) is rotatably mounted in a bore (39) in the cutter carrier (1), that the bore (39) is disposed at a distance from the slot (29), and that a force transfer member (43), which transfers the clamping force from the actuation member (41) onto the movable clamping jaw (11), is displaceably guided in the cutter carrier (1).

14. The holder as claimed in any one of claims 1 to 12, **characterized in that** the actuation member (57, 59) is rotatably mounted in a bore (55, 61) in the movable clamping jaw (11) or in the cutter carrier (1), and that the bore (55, 61) reaches as far as the slot (29), such that, through actuation of the actuation member (57, 59), a variable pressure can be exerted upon the region of the cutter carrier (1), or of the movable clamping jaw (11), located at the end of the bore, for the purpose of altering the clamping force of the movable clamping jaw (11).

15. A tool for chip-removing machining of a workpiece, having a holder as claimed in any one of the preceding claims and a tool insert inserted in the cavity of the holder.

## Revendications

1. Élément de maintien pour un insert d'outil (100) d'enlèvement de copeaux, en particulier un insert à saigner ou de coupe, comprenant un porte-lame (1) approximativement en forme de barre, un évidement réalisé dans ce dernier à une extrémité, lequel évidement sert de cavité de réception (5) pour l'insert d'outil et est limité par des mâchoires de serrage (9, 11) définissant le diamètre intérieur de la cavité de réception (5), une fente (29) s'étendant par l'intermédiaire d'une première extrémité jusqu'à proximité de la fermeture intérieure (7) de la cavité de réception (5) pour permettre une mobilité en pivotement élastique de l'une (11) des mâchoires de serrage et un dispositif de serrage qui comprend un organe d'actionnement (41, 57) pour produire une force de serrage agissant dans la région de la fente (29) sur la mâchoire de serrage mobile en pivotement (11),
**caractérisé en ce que** la deuxième extrémité (35) de la fente (29) s'étend jusqu'à proximité du bord latéral (10) du porte-lame (1), une nervure de liaison (37) élastique surmontant la deuxième extrémité (35) de la fente (29) étant disposée entre la mâchoire de serrage mobile en pivotement (11) et le porte-lame (1).

2. Élément de maintien selon la revendication 1, **caractérisé en ce que** la nervure de liaison (37) est constituée du même matériau que celui du porte-lame (1) et/ou de la mâchoire de serrage mobile en pivotement (11).

3. Élément de maintien selon l'une quelconque des revendications précédentes, **caractérisé en ce que** la nervure de liaison (37) présente une épaisseur de moins de 3 mm, en particulier dans la plage de 0,5 mm à 2 mm.

4. Élément de maintien selon l'une quelconque des revendications précédentes, **caractérisé en ce que** la fente (29) est coudée dans la région de la deuxième extrémité (35).

5. Élément de maintien selon la revendication 4, **caractérisé en ce que** la région d'extrémité coudée (35) de la fente (29) s'étend de manière inclinée à partir du bord latéral (10) en direction de la cavité de réception (5).

6. Élément de maintien selon la revendication 5, **caractérisé en ce que** l'angle de l'inclinaison par rapport à l'axe longitudinal de l'élément de maintien se situe dans la plage entre 5° et 45°, en particulier dans la plage entre 10° et 40°.

7. Élément de maintien selon l'une quelconque des revendications précédentes, **caractérisé en ce que** le côté extérieur de la nervure de liaison (37) s'étend parallèlement à la fente (29) dans la région de la deuxième extrémité (35).

8. Élément de maintien selon les revendications 5 et 7, **caractérisé en ce que** le côté extérieur de la nervure de liaison (37) présente la même inclinaison que celle de la région d'extrémité coudée (35) de la fente (29).

9. Élément de maintien selon l'une quelconque des revendications précédentes, **caractérisé en ce que** la fente (29) présente une allure en forme de Z.

10. Élément de maintien selon l'une quelconque des revendications précédentes, **caractérisé en ce que** la nervure de liaison (37) s'étend de manière inclinée au niveau de la deuxième extrémité (35) de la fente (29).

11. Élément de maintien selon l'une quelconque des revendications précédentes, **caractérisé en ce que** le côté extérieur de la nervure de liaison (37) s'étend de manière étagée, en particulier avec un ou deux étages.

12. Élément de maintien selon l'une quelconque des revendications 1 à 10, **caractérisé en ce que** la nervure de liaison (37) est disposée de manière à être située à l'intérieur de l'élément de maintien et une fente de bord (67) est disposée sur le côté de la nervure de liaison opposé à la fente (29) jusqu'au bord latéral (10) du porte-lame (1).

13. Élément de maintien selon l'une quelconque des revendications précédentes, **caractérisé en ce que** l'organe d'actionnement (41) est monté rotatif dans un alésage (39) dans le porte-lame (1), **en ce que** l'alésage (39) est disposé à distance de la fente (29) et **en ce qu'**un organe de transfert de force (43) transférant la force de serrage de l'organe d'actionnement (41) à la mâchoire de serrage mobile (11) est guidé de manière coulissante dans le porte-lame (1).

14. Élément de maintien selon l'une quelconque des revendications 1 à 12, **caractérisé en ce que** l'organe d'actionnement (57, 59) est monté rotatif dans un alésage (55, 61) dans la mâchoire de serrage mobile (11) ou dans le porte-lame (1) et **en ce que** l'alésage (55, 61) s'étend jusqu'à la fente (29), de telle sorte que, par l'actionnement de l'organe d'actionnement (57, 59), une pression modifiable puisse être exercée sur la région du porte-lame (1) ou de la mâchoire de serrage mobile (11) qui est située à l'extrémité de l'alésage, pour modifier la force de serrage de la mâchoire de serrage mobile (11).

15. Outil pour l'usinage par enlèvement de copeaux d'une pièce à usiner, comprenant un élément de maintien selon l'une quelconque des revendications précédentes et un insert d'outil inséré dans l'évidement dans l'élément de maintien.
